# EUROPEAN PATENT APPLICATION

(11) **EP 4 697 128 A1**
(43) Date of publication of application: **18.02.2026**
(21) Application number: 24911302.8
(22) Date of filing: 26.12.2024
(51) Int. Cl.: G06F 1/04

(54) **CHIP, COMMUNICATION METHOD, AND CONSUMABLE BOX**

(30) Priority: 29.12.2023 CN 202311871796; 21.06.2024 CN 202410813824; 30.08.2024 CN 202411220250
(71) Applicant: Geehy Microelectronics Inc., Zhuhai, Guangdong 519060 (CN)
(72) Inventor: HUANG, Jingjing, Zhuhai, Guangdong 519060 (CN)
(74) Representative: J A Kemp LLP
(86) International application number: PCT/CN2024/142647
(87) International publication number: WO 2025/140380

(57) **Abstract**

Embodiments of the present application relate to the field of imaging technology, and in particular, to a chip, a communication method, and a consumable cartridge. The chip includes a response module, a clock terminal, and a data terminal. The chip is configured not to receive a chip select signal from an image forming apparatus. During a communication process, the response module acquires a clock signal and first instruction information; when the first instruction information is instruction information of a first type, the response module determines a determination interval, and periodically monitors a duration during which the clock signal is a first-level signal based on the determination interval as a period; and stops executing the first instruction information if the duration during which the clock signal is the first-level signal reaches a preset duration; and when the first instruction information is instruction information of a second type, the response module determines an end moment corresponding to the instruction information of the second type through a preset manner based on content of the instruction information of the second type, and stops executing the first instruction information at the end moment of the instruction information of the second type, thereby improving the accuracy of data communication.

## Description

The present invention claims priorities to the Chinese Patent Application No. 202311871796.3, filed with the China National Intellectual Property Administration on December 29, 2023 and entitled "CONSUMABLE CHIP AND CONSUMABLE CARTRIDGE", the Chinese Patent Application No. 202411220250.6, filed with the China National Intellectual Property Administration on August 30, 2024 and entitled "CONSUMABLE CHIP AND CONSUMABLE CARTRIDGE", and the Chinese Patent Application No. 202410813824.4, filed with the China National Intellectual Property Administration on June 21, 2024 and entitled "CHIP, COMMUNICATION METHOD AND CONSUMABLE CARTRIDGE". All of the aforementioned three Chinese patent applications are hereby incorporated by reference in their entireties.

### TECHNICAL FIELD

The present application relates to the field of imaging technology, and in particular, to a chip, a communication method, and a consumable cartridge.

### BACKGROUND

An image forming apparatus, such as a printer, a copier, a facsimile machine, etc., is used to form images of the information to be imaged onto an imaging medium such as paper through an imaging material such as ink. During the imaging process of the image forming apparatus, it is necessary to acquire imaging auxiliary information to complete the imaging process. The imaging auxiliary information is usually recorded in a consumable chip. The consumable chip is detachably mounted in a consumable cartridge. The consumable cartridge can be an ink cartridge filled with ink or a toner cartridge filled with toner powder, where the ink cartridge and the toner are the recording materials. The consumable cartridge is detachably mounted in the image forming apparatus.

When the consumable cartridge is mounted in the image forming apparatus, an electrical connection is established between the consumable chip in the consumable cartridge and the image forming apparatus, and data communication is performed between the consumable chip and the image forming apparatus. For example, the consumable chip can be configured to control the authentication and data matching between the consumable cartridge and the image forming apparatus, and to provide the imaging auxiliary information for the image forming apparatus during the subsequent imaging process of the image forming apparatus. Specifically, the consumable chip on the consumable cartridge can be electrically connected to the image forming apparatus through corresponding terminals.

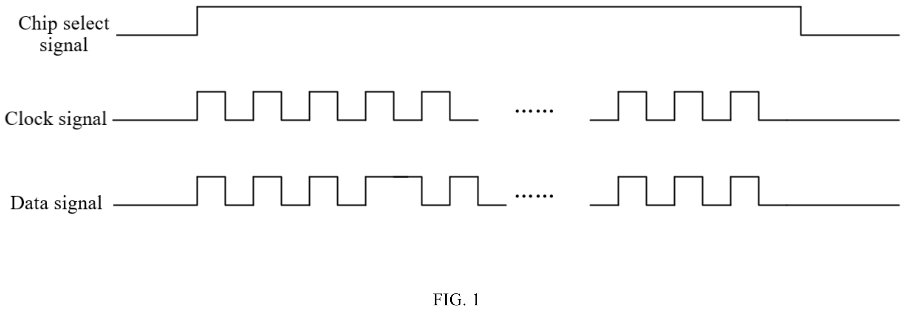

At present, a common consumable chip is provided with a chip select terminal, a clock terminal, and a data terminal, to complete data communication with the image forming apparatus. Herein, the chip select terminal and the clock terminal of the consumable chip respectively receive a chip select signal and a clock signal CLK sent by the image forming apparatus, the data terminal receives instruction information sent by the image forming apparatus, or the consumable chip sends data information to the image forming apparatus through the data terminal. Generally, a plurality of consumable cartridges can be mounted in the image forming apparatus, and the image forming apparatus can select the consumable chip which need to be communicated with the through chip select signal. For example, as shown in FIG. 1, when the image forming apparatus needs to perform data communication with the consumable chip, the image forming apparatus can convert the chip select signal into a high level, and send the high-level chip select signal to the chip select terminal of the consumable chip. The image forming apparatus also sends the clock signal CLK and the data information while sending the chip select signal. When receiving the high-level chip select signal, the consumable chip can determine to start data communication with the image forming apparatus, and the consumable chip starts to execute the instruction information, for example, starts to execute a write operation or a read operation.

When the data communication is completed or the data communication needs to be terminated, the image forming apparatus converts the chip select signal to a low level. When receiving the chip select signal converted to the low level, the consumable chip terminates the read operation or the write operation, and stops performing the data communication with the image forming apparatus.

In the above process, the consumable chip needs to receive the chip select signal through the chip select terminal to control the data communication process. However, during the data communication process, due to signal interference or poor contact between the consumable chip and the image forming apparatus, it is easy to cause an error phenomenon where the chip select signal experiences a high-level jump, which leads to interruptions in read or write operations of the consumable chip, thereby affecting the accuracy and the efficiency of data communication.

In some technologies, the consumable chip may be not provided with the chip select terminal, but determine whether the instruction information has ended by monitoring the state transitions of the clock signal. Generally, the clock signal sent by the image forming apparatus to the consumable chip corresponds to the instruction information. When the image forming apparatus attempts to perform data communication with the consumable chip, the image forming apparatus sends the clock signal to the consumable chip, and the clock signal received by the consumable chip has a rising edge or a high level. Similarly, when the image forming apparatus terminates data communication with the consumable chip, the clock signal received by the consumable chip becomes a continuous level signal.

In the above process, the end of data communication between the consumable chip and the image forming apparatus can be determined solely through the clock terminal and the data terminal. Since when data communication is performed between the image forming apparatus and the consumable chip, the data communication generally contains a plurality of pieces of instruction information, and the consumable chip needs to accurately determine the end time of each piece of instruction information to ensure the accuracy of data communication. In addition, it is not possible to flexibly determine whether an instruction has ended according to the type of the instruction, which easily leads to judgment errors and reduces the accuracy of data communication.

### SUMMARY

Embodiments of the present application provide a chip, a communication method, and a consumable cartridge, to improve the accuracy of data communication between the chip and an image forming apparatus.

According to a first aspect, an embodiment of the present application provides a chip, where the chip is in communication with an image forming apparatus, a communication process thereof includes several pieces of instruction information, and the chip includes a response module, a clock terminal and a data terminal, where the clock terminal is used to receive a clock signal from the image forming apparatus, the data terminal is used to send or receive a data signal, and the response module is electrically connected to the clock terminal and the data terminal, and is configured to send response data to the image forming apparatus during the communication process.

The chip is configured not to receive a chip select signal from the image forming apparatus;
the chip is used such that, during the communication process, the response module acquires a clock signal and first instruction information; where
when the first instruction information is instruction information of a first type, the response module determines a determination interval, and periodically monitors a duration during which the clock signal is a first-level signal based on the determination interval as a period; and stops executing the first instruction information if the duration during which the clock signal is the first-level signal reaches a preset duration; where the determination interval is a quantity of clocks for sending at least one set of response data to the image forming apparatus; and
when the first instruction information is instruction information of a second type, the response module determines an end moment corresponding to the instruction information of the second type through a preset manner based on content of the instruction information of the second type, and stops executing the first instruction information at the end moment of the instruction information of the second type.

In a possible implementation of the first aspect, the determination interval includes 2n*9 clock signals; where n is an integer greater than 0.

In a possible implementation of the first aspect, the chip is specifically used such that:
when the first instruction information is the instruction information of the first type, the response module determines the 2n*9 clock signals as the determination interval, takes a 2n*9-th clock signal after a first clock signal as a reference clock signal based on the determination interval, and determines a target transition moment of the reference clock signal as a target reference moment; where the first clock signal is a clock signal corresponding to a moment when the response module starts sending response data to the image forming apparatus; the target transition moment of the reference clock signal includes a moment when the reference clock signal transitions from the first-level signal to the second-level signal, or a moment when the reference clock signal transitions from the second-level signal to the first-level signal; and the first-level signal is different from the second-level signal;
monitors a duration during which the clock signal is the first-level signal after the target reference moment; and
stops executing the first instruction information if the duration during which the clock signal is the first-level signal reaches the preset duration.

In a possible implementation of the first aspect, the chip is further used such that:
if the duration during which the clock signal is the first-level signal does not reach the preset duration, the response module reuses the 2n*9-th clock signal received after the target reference moment as the reference clock signal, and updates the target reference moment based on the target transition moment of the reference clock signal; and
re-monitors the duration during which the clock signal is the first-level signal after the target reference moment, and re-updates the target reference moment when the duration during which the clock signal is the first-level signal does not reach the preset duration, until monitoring that the duration during which the clock signal is the first-level signal reaches the preset duration, and then stops executing the first instruction information.

In a possible implementation of the first aspect, the preset duration is greater than a duration of one clock signal, and is less than an interval duration between the first instruction information and a next instruction information.

In a possible implementation of the first aspect, the first-level signal includes a low-level signal.

In a possible implementation of the first aspect, the one set of response data includes original data and inverse code data, where the original data and the inverse code data are inverse codes of each other.

In a possible implementation of the first aspect, the instruction information of the first type is instruction information with a non-fixed duration, and the instruction information of the second type is instruction information with a fixed duration.

In a second aspect, an embodiment of the present application provides a communication method, which is applied to the chip according to any one of the first aspect, the method includes:
acquiring a clock signal and first instruction information during a communication process;
when the first instruction information is instruction information of a first type, determining a determination interval, and periodically monitoring a duration during which the clock signal is a first-level signal based on the determination interval as a period; and stopping executing the first instruction information if the duration during which the clock signal is the first-level signal reaches a preset duration; where the determination interval is a quantity of clocks for sending at least one set of response data to the image forming apparatus; and
when the first instruction information is instruction information of a second type, determining an end moment corresponding to the instruction information of the second type through a preset manner based on content of the instruction information of the second type, and stopping executing the first instruction information at the end moment of the instruction information of the second type.

In a third aspect, an embodiment of the present application provides a consumable cartridge, including the chip according to any one of the first aspect.

By adopting the solutions provided in the embodiments of the present application, when the chip is electrically connected to the image forming apparatus, the clock terminal and the data terminal of the chip are electrically connected to the image forming apparatus, and the chip is configured not to receive the chip select signal from the image forming apparatus, so that the possibility of instruction information execution errors caused by chip select signal jumps can be avoided, thereby improving the accuracy of communication between the chip and the image forming apparatus. Furthermore, in the embodiments of the present application, the chip includes the response module, where the response module can determine the determination interval when the first instruction information is the instruction information of the first type and periodically monitors whether the duration during which the clock signal is the first-level signal reaches the preset duration based on the determination interval as a period, and if so, the response module determines that the first instruction information has ended, and stops executing the first instruction information after determining that the first instruction information has ended. That is, the response module determines whether the instruction information of the first type has ended only after sending at least one set of response data to the image forming apparatus each time, in this way, the frequency of detecting whether the instruction information of the first type has ended can be reduced, and the possibility of misjudging the end of the instruction information can be reduced, thereby improving the accuracy and efficiency of data communication. For the instruction information of the second type, the response module may determine the end moment of the instruction information according to the instruction information of the second type, and stop executing the first instruction information at the end moment. In the embodiments of the present application, different manners may be adopted for different pieces of instruction information to determine whether the instruction information has ended, that is, the end of the instruction information may be flexibly determined according to the type of the instruction information, so that the probability of errors when determining the end of instruction information by monitoring the clock signal may be reduced, to further improve the accuracy of data communication, thereby ensuring the working efficiency as well as the data communication efficiency of the chip.

### BRIEF DESCRIPTION OF THE DRAWINGS

FIG. 1 is a schematic diagram of a working time sequence of an existing consumable chip.
FIG. 2a is a schematic structural diagram of a communication system provided by an embodiment of the present application.
FIG. 2b is a schematic structural diagram of another communication system provided by an embodiment of the present invention.
FIG. 3 is a schematic structural diagram of a consumable cartridge provided by an embodiment of the present application.
FIG. 4 is a schematic structural diagram of a contact pin of a printing device provided by an embodiment of the present application.
FIG. 5 is a schematic structural diagram of a consumable chip provided by an embodiment of the present application.
FIG. 6 is a partially enlarged structural schematic diagram of a contact pin of a printing device provided by an embodiment of the present application.
FIG. 7 is a scenario schematic diagram of a working time sequence of a consumable chip provided by an embodiment of the present application.
FIG. 8a is a schematic structural diagram of another consumable chip provided by an embodiment of the present application.
FIG. 8b is a schematic structural diagram of yet another consumable chip provided by an embodiment of the present application.
FIG. 8c is a schematic structural diagram of a storage assembly in a consumable chip provided by an embodiment of the present application.
FIG. 9a is a scenario schematic diagram of a working time sequence of another consumable chip provided by an embodiment of the present application.
FIG. 9b is a scenario schematic diagram of a working time sequence of yet another consumable chip provided by an embodiment of the present application.
FIG. 9c is a scenario schematic diagram of a working time sequence of still another consumable chip provided by an embodiment of the present application.
FIG. 10 is a scenario schematic diagram of a working time sequence of yet still another consumable chip provided by an embodiment of the present application.
FIG. 11 is a schematic flowchart of a communication method provided by an embodiment of the present application.

### DESCRIPTION OF EMBODIMENTS

In order to better understand the technical solutions of the present application, the embodiments of the present application will be described below in detail with reference to the accompanying drawings.

It should be noted that the described embodiments are merely some rather than all of the embodiments of the present specification. Based on the embodiments in this specification, all other embodiments obtained by those ordinary skilled in the art without making creative efforts shall fall within the protection scope of this specification.

The terms used in the embodiments of the present application are only for the purpose of describing particular embodiments and are not intended to limit this specification. As used in the embodiments of the present application and the appended claims, the singular forms of "a", "the", and "this" are intended to include plural forms as well, unless the context clearly indicates otherwise.

It should be understood that, the term "and/or" used herein is only an association relationship for describing associated objects, and indicates that there can be three types of relationships. For example, A and/or B may indicate three cases: A exists alone, both A and B exist simultaneously, and B exists alone. In addition, the character "/" in this specification generally indicates that the associated objects before and after it are in an "or" relationship.

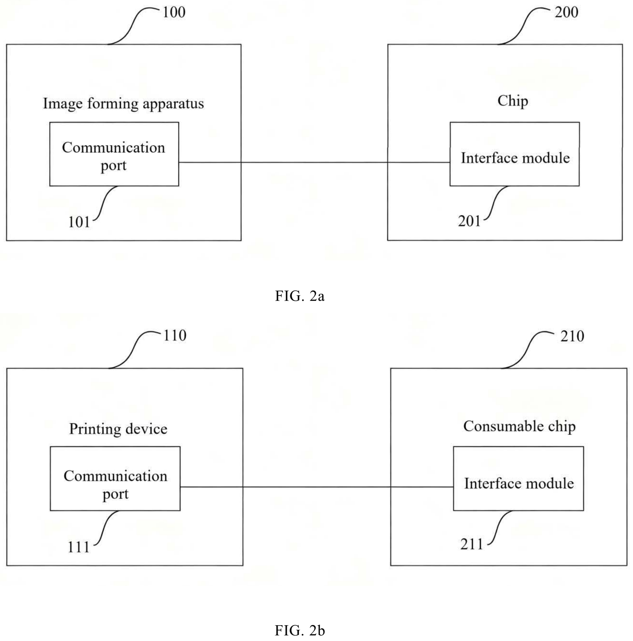

Referring to FIG. 2a, it is a schematic structural diagram of a communication system provided by an embodiment of the present application. As shown in FIG. 2a, the communication system includes an image forming apparatus 100 and a chip 200, where a communication port 101 is provided on the image forming apparatus 100, an interface module 201 is provided on a slave, a communication link is established between the communication port 101 and the interface module 201, and the image forming apparatus 100 and the chip 200 can transmit information through the communication link. Specifically, the communication port 101 and the interface module 201 may be electrically connected through a contact pin, a contact or an elastic sheet, etc., to establish the communication link. In other embodiments, the communication link may also be a non-contact communication link, that is, a wireless communication link, and at this time, the communication port 101 and the interface module 201 may include an antenna or a coil used to send wireless signals. The image forming apparatus 100 involved in the embodiments of the present application is a device that can implement data processing, control or related operations, and the chip 200 is configured to be mounted on the image forming apparatus 100 to assist the image forming apparatus 100 to complete related functions.

In one example, the image forming apparatus may be a printer, a copier, a facsimile machine, etc., and the chip may be a consumable chip. In some application scenarios, such as FIG. 2b, the image forming apparatus 100 is a printing device 110, and the chip 200 is a consumable chip 210. The printing device 110 is provided with a communication port 111, the consumable chip 210 is provided with an interface module 211, a communication link is established between the communication port 111 and the interface module 211, and the printing device 110 and the consumable chip 210 can transmit information through the communication link. For example, during the imaging process, the consumable chip 210 is configured to provide identity recognition information and usage status information of recording material. When the printing device 110 sends a signal to the consumable chip 210, the printing device 110 acts as a sender, and the consumable chip 210 acts as a receiver; and when the consumable chip 210 sends a signal to the printing device 110, the consumable chip 210 acts as the sender, and the printing device 110 acts as the receiver.

For ease of description, the technical solutions provided by the embodiments of the present application are described below by taking an example in which the image forming apparatus 100 is the printing device 110 while the chip 200 is the consumable chip 210. However, those skilled in the art should understand that the technical solutions provided by the embodiments of the present application are not limited to the printing device 110 and the consumable chip 210, but may also be applied to other types of image forming apparatus and chips, which is not limited in the embodiments of the present application herein.

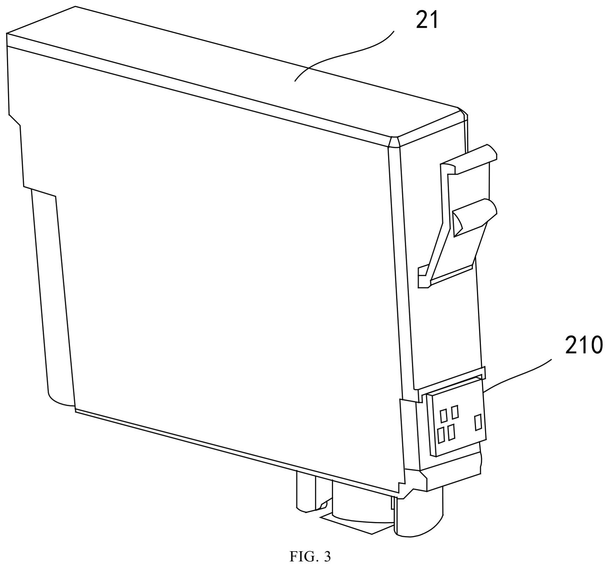

During the imaging process, the printing device 110 requires the assistance of the imaging auxiliary information of the consumable chip 210 in a consumable cartridge 21 to complete the imaging process. In the related art, the consumable cartridge 21 may have a structure shown in FIG. 3. The imaging auxiliary information of the printing device 110 is recorded not only within the printing device 110 but also in the consumable chip 210. The consumable chip 210 mainly plays a role in identity recognition and providing the usage status of the recording material, so that after the consumable chip 210 is mounted onto the printing device 110, the printing device 110 can read information from the consumable chip 210 and can also send the status and the relevant information of the printing job to the consumable chip 210. The consumable chip 210 can be electrically connected to the printing device 110 through electrical contact. For example, a contact pin on the printing device 110 makes electrical contact with a contact part in the consumable chip 210 to achieve a communication connection.

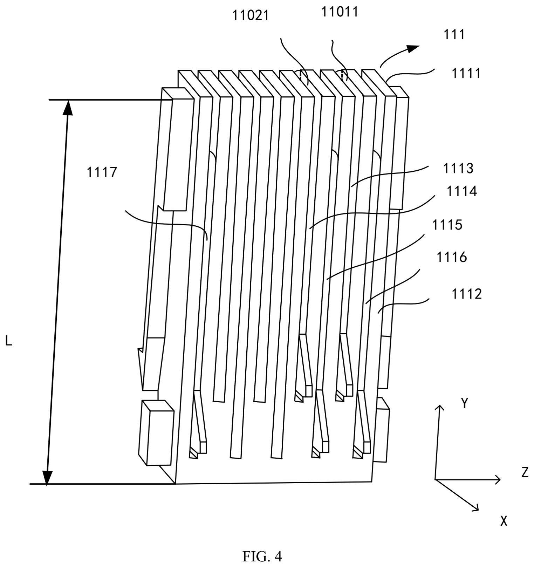

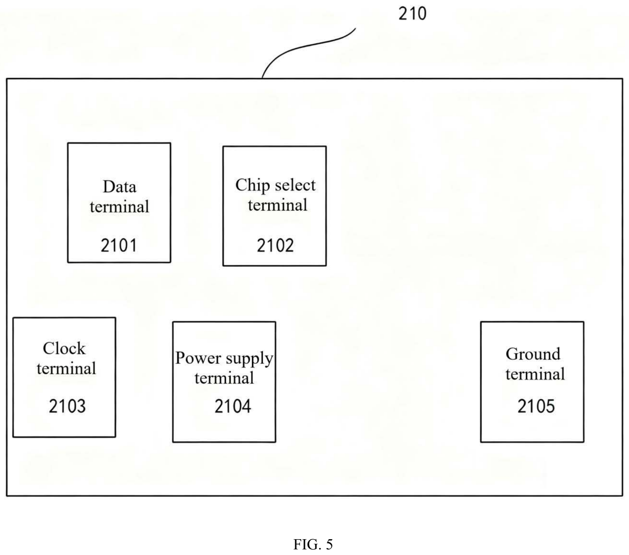

As shown in FIG. 4, the printing device 110 includes a contact pin frame 111, the contact pin frame 111 includes an upper end surface 1111 of the contact pin frame 111 in a Y-axis direction, as well as a front end surface 1112 of the contact pin frame 111, a first contact pin 1113, a second contact pin 1114, a third contact pin 1115, a fourth contact pin 1116, and a fifth contact pin 1117 that are in a X-axis direction. As shown in FIG. 5, the consumable chip 210 includes a data terminal 2101, a chip select terminal 2102, a clock terminal 2103, a power supply terminal 2104, and a ground terminal 2105. Herein, the first contact pin 1113 of the printing device 110 may contact with the data terminal 2101 of the consumable chip 210, the second contact pin 1114 of the printing device 110 may contact with the chip select terminal 2102 of the consumable chip 210, the third contact pin 1115 of the printing device 110 may contact with the power supply terminal 2104 of the consumable chip 210, the fourth contact pin 1116 of the printing device 110 may contact with the clock terminal 2103 of the consumable chip 210, and the fifth contact pin 1117 of the printing device 110 may contact with the ground terminal 2105 of the consumable chip. In this way, the printing device 110 can send a data signal to the consumable chip 210 through the contact between the first contact pin 1113 and the data terminal 2101, the printing device 110 can send a chip select signal to the consumable chip 210 through the contact between the second contact pin 1114 and the chip select terminal 2102, the printing device 110 can send a clock signal to the consumable chip 210 through the contact between the fourth contact pin 1116 and the clock terminal 2103, the printing device 110 can provide an operating voltage to the consumable chip 210 through the contact between the third contact pin 1115 and the power supply terminal 2104, and the printing device 110 can provide a unified reference low level for the data received and sent between the printing device 110 and the consumable chip 210 through the contact between the ground terminal 2105 and the fifth contact pin 1117, which ensures the correctness and stability of the communication process.

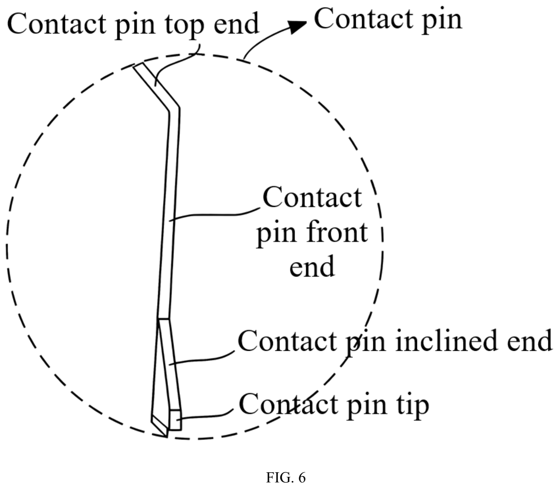

In the related art, the data terminal 2101, the chip select terminal 2102, the clock terminal 2103, the power supply terminal 2104 and the ground terminal 2105 in the consumable chip 210 can all be planar terminals. In the printing device 110, each of the first contact pin 113, the second contact pin 1114, the third contact pin 1115, the fourth contact pin 1116, and the fifth contact pin 1117 includes a contact pin top end, a contact pin front end, a contact pin inclined end, and a contact pin tip, as shown in FIG. 6. At this time, in the printing device 110, the first contact pin 1113, the second contact pin 1114, the third contact pin 1115, the fourth contact pin 1116, and the fifth contact pin 1117 are respectively in contact with the data terminal 2101, the chip select terminal 2102, the clock terminal 2103, the power supply terminal 2104, and the ground terminal 2105 among the planar terminals of the consumable chip 210 through the contact pin tips.

Generally, the printing device 110 is provided with a plurality of consumable chips 110, and the plurality of consumable chips 210 communicate with the printing device 110 through the same communication bus. At the same time, the printing device 110 can only communicate with one consumable chip 210. In order to ensure that the printing device 110 can communicate with the consumable chip 210, the printing device 110 needs to send a chip select signal to the consumable chip 210 that needs to be communicated with, to inform the consumable chip 210 that the printing device 110 has selected it for communication through the chip select signal. Herein, the chip select signal (Chip Select Signal, CS for short) is a control signal in a digital circuit for selecting a specific integrated circuit chip (Chip) for communication. When a plurality of chips or devices are mounted on the same communication bus, the chip select signal is used to indicate which chip can exchange data with the processor or controller. As shown in FIG. 1, when the printing device 110 needs to communicate data with one consumable chip 210, the printing device 110 can convert the chip select signal for selecting that consumable chip 210 into a high level, and send this high-level chip select signal to the chip select terminal of the consumable chip 210. The printing device 110 also sends the clock signal CLK and data information while sending the chip select signal. When the consumable chip 210 receives the chip select signal converted to the high level through the chip select terminal 2102, the consumable chip 210 starts to execute instruction information, for example, starts to execute a read operation. At this time, the consumable chip 210, according to the clock signal CLK, stores the data information received by the data terminal 2101 in a storage assembly inside the consumable chip 210, or sends the imaging auxiliary information stored in the storage assembly to the data terminal 2101 to send the imaging auxiliary information to the printing device 110 through the data terminal 2101.

When the data communication is completed or the data communication needs to be terminated, the printing device 110 converts the chip select signal to a low level. When the consumable chip 210 receives the chip select signal converted to the low level, the consumable chip 210 determines the end of the instruction information, terminates the read operation, and stops data communication with the printing device 110.

However, the terminals located on the plane of the consumable chip 210 are relatively dense, and the gaps between the terminals are relatively small, which easily cause the contact pins of the printing device 110 to come into contact with the terminals that do not correspond to their functions when users mount or unplug and plug the consumable cartridge 21, resulting in a short circuit. In addition, when the printing device 110 sends a plurality of signals to the consumable chip 210 at the same time, it is easy to encounter problems such as the clock signal interference with the chip select signal, which causes the chip select signal to jump, thereby causing problems such as data communication interruption, error or data corruption.

Generally, the clock signal sent by the printing device 110 to the consumable chip 210 corresponds to the instruction information. When the instruction information received by the consumable chip 210 has not ended, the clock signal alternates between the high-level signal and the low-level signal. When the instruction information has ended, the clock signal is a continuous low-level signal. In some technologies, the consumable chip 210 can determine whether the instruction information has ended by monitoring the state transitions of the clock signal.

In the above process, there is no need to provide the chip select terminal in the consumable chip 210, and it can be determined whether the instruction information has ended only through the clock terminal and the data terminal. In this way, the interruptions of the read or write operations on the consumable chip caused by the abnormality of the chip select terminal or the chip select signal can be avoided. However, when the printing device 110 performs data communication with the consumable chip 210, the data communication generally includes a plurality of pieces of instruction information, and the consumable chip 210 needs to accurately determine the end time of each piece of instruction information to ensure the accuracy of the data communication. The above-mentioned process cannot flexibly determine the end of the instruction information according to the type of the instruction, which is prone to judgment errors and reduces the accuracy of data communication.

Furthermore, when there is a situation that the clock signal in one piece of instruction information maintains at a continuous low level, if the duration is long, there is a possibility that the instruction information will be misjudged as having ended, thereby reducing the accuracy and efficiency of data communication.

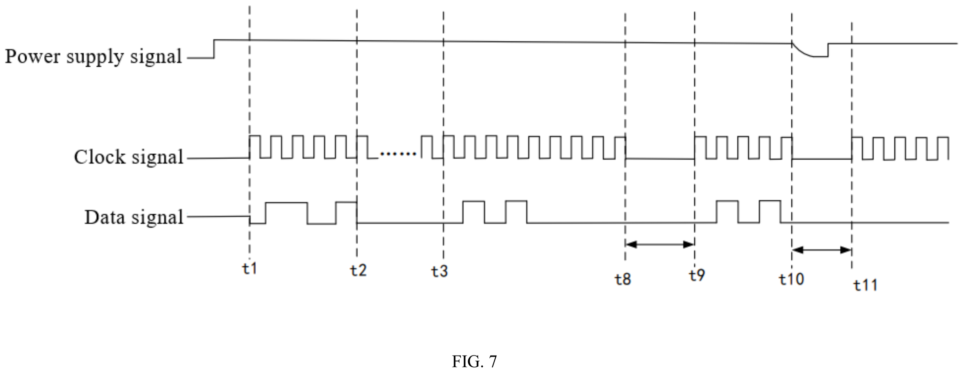

Exemplarily, as shown in FIG. 7, it is assumed that the time corresponding to the processes of sending, processing, and responding the first instruction information is t1-t10, and the second instruction information starts to be executed after time t11. In FIG. 7, during the processing of the first instruction information, there is a period of time where the clock signal maintains a state of the first-level signal, rather than alternating between the first-level signal and the second-level signal, but the first instruction information has not ended. It is assumed that a time interval between t8 and t9 is X, a time interval between t10 and t11 is Y, and the first preset duration is Z. The time interval X between t8 and t9 is longer than the first preset duration Z, the consumable chip 210 in some technologies determines the instruction information every 9 clock signals, and the consumable chip 210 needs to detect whether the clock signal alternates between the first-level signal and the second-level signal after t8, to determine whether the first instruction information has ended. At this time, if the consumable chip 210 fails to detect the clock signal which alternates between the first-level signal and the second-level signal for more than first preset duration Z, it will be determined that the first instruction information has ended, however, the first instruction information has not actually ended, leading to data communication errors.

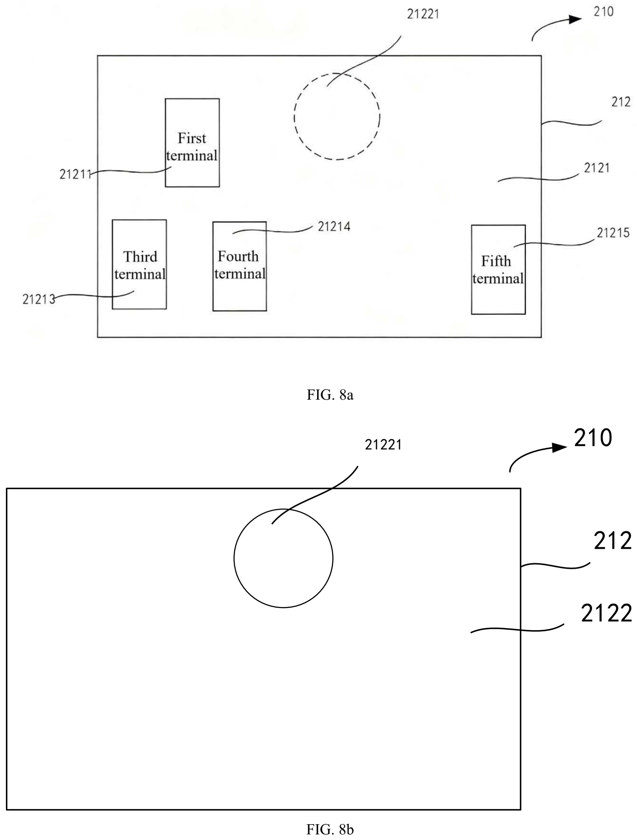

In order to address the above-mentioned problems, referring to FIG. 8a, it is a schematic structural diagram of a consumable chip 210 provided by an embodiment of the present application. As shown in FIG. 8a, the consumable chip 210 includes a first terminal 21211 and a third terminal 21213. In some embodiments, the first terminal 21211 can be a data terminal and the third terminal 21213 can be a clock terminal. The consumable chip 210 further includes a response module 21221, as shown in FIG. 8b. The response module 21221 is electrically connected to the first terminal 21211 and the third terminal 21213.

Referring to FIG. 8a, in some embodiments, the consumable chip 210 further includes a fourth terminal 21214 and a fifth terminal 21215. Herein, the fourth terminal 21214 may be a power supply terminal, the fifth terminal 21215 may be a ground terminal, and the response module 21221 may be electrically connected to the fourth terminal 21214 and the fifth terminal 21215. In other embodiments, the consumable chip 210 includes a substrate 212, where the substrate 212 includes a first plane 2121 and a second plane 2122, with the first plane 2121 being used for electrical connection to the printing device 110. The first terminal 21211, the third terminal 21213, the fourth terminal 21214, and the fifth terminal 21215 mentioned above are all located on the first plane 2121, the consumable chip 210 is configured not to receive the chip select signal from the printing device 110, and the consumable chip does not have the chip select terminal electrically connected to the contact pin for outputting the chip select signal in the printing device, or the chip select terminal is shielded by an electrically insulating component, or the chip select terminal on the consumable chip is open-circuited with the chip select pin for sending the chip select signal on the consumable chip. Referring to FIG. 8b, the response module 21221 may be located on the second plane 2122. For ease of description, the following description is given by using an example in which the first terminal 21211 is the data terminal, the third terminal 21213 is the clock terminal, the fourth terminal 21214 is the power supply terminal, and the fifth terminal 21215 is the ground terminal.

The printing device 110 sends a data instruction and a communication signal to the response module 21221, where the data instruction includes data sent by the printing device 110 to the consumable chip 210 and data received by the printing device 110 from the consumable chip 210, and the communication signal includes a VCC (power supply signal), a CLK (clock signal), an SDA (data signal) and a GND (reference ground signal).

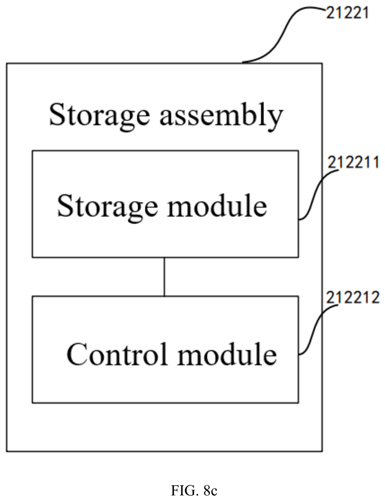

In some embodiments, as shown in FIG. 8c, the response module 21221 may be a storage assembly including a storage module 212211 and a control module 21222, where the storage module 212211 is configured to store information about the consumable chip, such as a manufacturing date of the consumable chip 210, a manufacturer, a color of the recording material (e.g., ink, carbon powder), a capacity of the recording material, a remaining amount or consumption amount of the recording material, a quantity of printable pages, a quantity of printed pages, and other rewritable or read-only information. In the embodiments of the present application, the storage module 212211 can use a common non-volatile memory, such as an EPROM (Erasable Programmable Read-Only Memory, Erasable Programmable Read-Only Memory), an EEPROM (Electrically Erasable Programmable Read-Only Memory, Electrically Erasable Programmable Read-Only Memory), a FLASH (Flash Memory), a ferroelectric memory, a phase change memory, etc. Alternatively, it may employ a combination of a volatile memory and a power supply, such as a SRAM (Static Random-Access Memory, Static Random-Access Memory) + battery or capacitor, or a DRAM (Dynamic Random Access Memory, Dynamic Random Access Memory) + battery or capacitor.

The control module 212212 may specifically be a single chip microcomputer (MCU), a microcontroller, an FPGA (Field Programmable Gate Array, Field Programmable Gate Array), a logic circuit (ASIC), etc., and is configured to control the communication between the consumable chip and the printing device, read information from, and store information to the storage module 212211.

In one embodiment, the storage module 212211 and the control modules 212212 may be integrally within a same circuit. The circuit may be designed as an integrated circuit (ASIC), and is embodied as a wafer. Then, the consumable chip 210 includes the wafer and a circuit board that bears the wafer.

Based on the consumable chip 210 shown in FIGs. 8a, 8b, and 8c, the consumable chip 210 communicates with the printing device 110, the communication process contains several pieces of instruction information. The consumable chip 210 includes a response module 21221, a clock terminal and a data terminal, where the clock terminal is used to receive a clock signal from the printing device 110, the data terminal is used to send or receive a data signal, and the response module 21221 is electrically connected to the clock terminal and the data terminal and is configured to send response data to the printing device 110 during the communication process. The consumable chip 210 is configured not to receive a chip select signal from the printing device 110, that is, the consumable chip does not have a chip select terminal electrically that is connected to the contact pin in the printing device and used to output the chip select signal. The consumable chip 210 is used such that, during the communication process, the response module 21221 acquires the clock signal and first instruction information. When the first instruction information is instruction information of a first type, the response module 21221 determines a determination interval, and periodically monitors a duration during which the clock signal is a first-level signal based on the determination interval as a period; and stops executing the first instruction information if the duration during which the clock signal is the first-level signal reaches a preset duration. When the first instruction information is instruction information of a second type, the response module 21221 determines end moment corresponding to the instruction information of the second type through a preset manner based on content of the instruction information of the second type, and stops executing the first instruction information at the end moment of the instruction information of the second type. In this way, in the embodiments of the present application, when the consumable chip 210 is electrically connected to the printing device 110, the clock terminal and the data terminal of the consumable chip 210 are electrically connected to the printing device 110, and the consumable chip 210 is configured not to receive the chip select signal from the printing device 110, so that the possibility of instruction information execution errors caused by chip select signal jumps can be avoided, thereby improving the accuracy of communication between the consumable chip 210 and the printing device 110. Furthermore, in the embodiments of the present application, the consumable chip 210 includes the response module 21221, where the response module 21221 can determine the determination interval when the first instruction information is the instruction information of the first type and periodically monitor whether the duration during which the clock signal is the first-level signal reaches the preset duration based on the determination interval as a period, and if so, the response module determines that the first instruction information has ended, and stops executing the first instruction information after determining that the first instruction information has ended. That is, the response module determines whether the instruction information of the first type has ended only after sending at least one set of response data to the printing device 110 each time, in this way, the frequency of detecting whether the instruction information of the first type ends can be reduced, and the possibility of misjudging the end of the instruction information can be reduced, thereby improving the accuracy and efficiency of data communication. For the instruction information of the second type, the response module 21221 may determine the end moment of the instruction information according to the instruction information of the second type, and stop executing the first instruction information at the end moment. In the embodiments of the present application, different manners may be adopted for different pieces of instruction information to determine whether the instruction information has ended, that is, the end of the instruction information may be flexibly determined according to the type of the instruction information, so that the probability of errors when determining the end of instruction information by monitoring the clock signal may be reduced, to further improve the accuracy of data communication, thereby ensuring the working efficiency as well as the data communication efficiency of the consumable chip 210. The following provides a detailed description.

In a first aspect, an embodiment of the present application provides a consumable chip 210, where the consumable chip 210 is in communication with a printing device 110. A communication process includes several pieces of instruction information, and the consumable chip 210 includes a response module 21221, a clock terminal and a data terminal, where the clock terminal is used to receive a clock signal from the printing device 110, the data terminal is used to send or receive a data signal, and the response module 21221 is electrically connected to the clock terminal and the data terminal and is configured to send response data to the printing device 110 during the communication process; and the consumable chip 210 is configured to not receive a chip select signal from the printing device 110.

The consumable chip 210 is used such that, during the communication process, the response module 21221 acquires a clock signal and first instruction information.

When the first instruction information is instruction information of a first type, the response module 21221 determines a determination interval, and periodically monitors a duration during which the clock signal is a first-level signal based on the determination interval as a period; and stops executing the first instruction information if the duration during which the clock signal is the first-level signal reaches a preset duration; where the determination interval is a quantity of clocks for sending at least one set of response data to the printing device 110.

When the first instruction information is instruction information of a second type, the response module 21221 determines an end moment corresponding to the instruction information of the second type through a preset manner based on content of the instruction information of the second type, and stops executing the first instruction information at the end moment of the instruction information of the second type.

In the embodiments of the present application, the consumable chip 210 includes the clock terminal and the data terminal, in this way, the clock terminal can receive the clock signal sent by the printing device 110, and the data terminal can receive the data signal sent by the printing device 110 or send the data signal to the printing device 110. The consumable chip 210 further includes the response module 21221, where the response module 21221 is electrically connected to the clock terminal and the data terminal, and the response module 21221 can send the response data to the printing device 110. In order to send the response data to the printing device 110 more accurately, the response module 21221 needs to acquire the clock signal and the first instruction information first. At this time, the response module 21221 can receive the clock signal sent by the printing device 110 through the clock terminal, and receive the first instruction information sent by the printing device 110 through the data terminal. After receiving the first instruction information, the response module 21221 can parse the first instruction information, determine the response data according to the content of the first instruction information, and send the response data to the printing device 110 through the data terminal. Since the consumable chip 210 is electrically insulated from the contact pin which outputs the chip select signal in the printing device 110, that is, the consumable chip 210 is not electrically connected to the contact pin which outputs the chip select signal in the printing device 110, and the consumable chip 210 does not receive the chip select signal from the printing device 110, so that the consumable chip 210 cannot determine whether the first instruction information has ended according to the chip select signal. In order to ensure the accuracy of data communication, the consumable chip 210 can determine whether the first instruction information has ended according to the clock signal.

There may be various types of instruction information, and different types of instruction information adopt different manners to determine the end time of the instruction information. Therefore, the response module 21221 needs to determine the type of the instruction information before determining the end time of the instruction information, to determine the end moment of the instruction information according to the type of the instruction information. For example, when the instruction information is instruction information with a fixed duration, the response module 21221 may directly determine the end moment corresponding to the instruction information through this instruction information. When the instruction information is instruction information with a non-fixed duration, the response module 21221 needs to determine the end moment of the instruction information according to the clock signal. Based on this, after acquiring the first instruction information, the response module 21221 needs to determine the type of the first instruction information first in order to ensure the accuracy of determining the end moment of the first instruction information. After acquiring the first instruction information, the response module 21221 can parse the first instruction information to acquire information such as an instruction code, an identification code, and a header in the first instruction information. The response module 21221 can determine the type of the first instruction information based on least one piece of information from the instruction code, the identification code, and the header in the first instruction information. In some embodiments, the instruction information of the first type is the instruction information with a non-fixed duration, while the instruction information of the second type is the instruction information with a fixed duration. When it is determined that the first instruction information is the instruction information of the first type, it indicates that the first instruction information is the instruction information with a non-fixed duration. That is to say, the first instruction information is not the instruction information with a fixed duration. At this point, the response module 21221 needs to determine the end moment of the instruction information of the first type according to the clock signal. Generally, the clock signal sent by printing device 110 to consumable chip 210 corresponds to the data signal sent by printing device 110 to consumable chip 210. For example, when the printing device 110 does not send instruction information to the consumable chip 210, the clock signal sent by the printing device 110 to the consumable chip 210 is a continuous first-level signal. That is, the printing device 110 sends an invalid clock signal to the consumable chip 210. When the printing device 110 needs to send the instruction information to the consumable chip 210, the clock signal sent by the printing device 110 to the consumable chip 210 alternates between the first-level signal and the second-level signal. Therefore, the response module 21221 can detect whether the duration during which the clock signal is the first-level signal reaches the preset duration when the first instruction information is the instruction information of the first type to determine whether the instruction information of the first type has ended.

After the consumable chip 210 receives the first instruction information, the response module 21221 can set a monitoring period as the determination interval. That is, the response module 21221 can take the quantity of clocks for the consumable chip 210 to send at least one set of response data to the printing device 110 as the monitoring period. In this way, the response module 21221 periodically monitors whether the duration during which the clock signal is the first-level signal reaches the preset duration based on the determination interval as a period. Herein, the quantity of clocks for the response module 21221 to send a set of response data to the printing device 210 can be predetermined. In some embodiments, a set of response data includes original data and inverse code data, where the original data and the inverse code data are inverse codes of each other. Therefore, a set of response data usually contains an even multiple of a single set of original data or a single set of inverse code data, and a set of clock quantities usually corresponds to 9-bit data (a single set of original data or a single set of inverse code data), including 8 valid data bits and one check bit, and therefore the quantity of clocks for sending a set of response data can be a quantity of clocks corresponding to 2*9 bits. The printing device 110 can determine the correctness of a set of response data based on a check code included in this set of response data. The determination interval is the quantity of clocks for sending several sets of response data to the printing device 110, and may be preset according to actual requirements. For example, the determination interval may be the quantity of clocks for sending a set of response data, and at this time, the determination interval is the quantity of clocks corresponding to 2*9 bits. Alternatively, the determination interval may be the quantity of clocks for sending two sets of response data, and at this time, the determination interval is the quantity of clocks corresponding to 4*9 bits. Of course, the determination interval may be the quantity of clocks for sending any other quantities of sets of response data to the printing device 110, which is not limited in the embodiments of the present invention herein.

That is to say, after determining the determination interval, the response module 21221, using the determination interval as a time interval, monitors the duration during which the clock signal is the first-level signal once after per determination interval. If it is monitored that the duration during which the clock signal is the first-level signal reaches the preset duration, it can be determined that the first instruction information has ended. When it is determined that the first instruction information has ended, the execution of the first instruction information may be stopped, that is, the execution of read or write operation may be stopped.

When it is determined that the first instruction information is not the instruction information of the first type but the instruction information of the second type, it indicates that the first instruction information is the instruction information with a fixed duration. In some embodiments, the end moment corresponding to the instruction information of the second type may be pre-stored in the response module 21221. In this way, after determining that the first instruction information is the instruction information of the second type, the response module 21221 may determine the end moment of the received first instruction information based on the pre-stored end moment corresponding to the instruction information of the second type. Subsequently, it can be determined that the instruction information of the second type has ended according to the clock signal when the end moment of the first instruction information is reached. At the end moment of the second instruction information, the execution of the first instruction information may be stopped, that is, the execution of the read operation or the write operation is stopped. For example, the response module 21221 has pre-stored the end moment corresponding to the instruction information of the second type as the 36th clock signal in the response information, then when the response module 21221 determines that the first instruction information is the instruction information of the second type, it may be determined that the end moment of the first instruction information is the 36th clock signal of the response information. At this time, the response module 21221 may determine that the first instruction information has ended upon arrival of the 36th clock signal in the response information, and stop executing the first instruction information, that is, stop executing the read or write operation.

Alternatively, in other embodiments, the printing device 110 can also specify the end moment of the instruction information of the second type. After determining the first instruction information is the instruction information of the second type, the response module 21221 parses the end moment recorded in the first instruction information to determine the end moment of the first instruction information, so that when the end moment of the first instruction information is reached, it can be determined that the first instruction information has ended, and the execution of the first instruction information is stopped, that is, the execution of read or write operation is stopped.

Of course, when the first instruction information is the instruction information of the second type, the response module 21221 may also determine the end moment of the first instruction information in other manners, which is not limited in the embodiments of the present invention herein.

In the embodiments of the present application, the printing device 110 is electrically connected to the data terminal and the clock terminal of the consumable chip 210, and the consumable chip 210 does not include a chip select terminal, so that the second contact pin 1114 of the printing device 110 are not electrically connected to the chip select terminal, but is in contact with a PCB (Printed Circuit Board) material without copper coating on the substrate 212, that is, the second contact pin 1114 of the printing device 110 which outputs the chip select signal is not electrically connected to the consumable chip 210. In this way, the accuracy of instruction information execution can be ensured, and the accuracy of communication between the consumable chip 210 and the printing device 110 can be improved. Furthermore, in the embodiments of the present application, although the consumable chip 210 cannot receive the chip select signal, the response module 21221 may determine whether the instruction information of the first type has ended after sending at least one set of response data to the printing device 110 each time. In this way, the end of the first instruction information may also be accurately determined, and a frequency of detecting whether the instruction information of the first type has ended may be reduced, thereby minimizing the possibility of misjudging the end of the instruction information and improving the accuracy and efficiency of data communication. That is to say, in the embodiments of the present application, even if no chip select terminal is provided in the first plane 2121 of the consumable chip 210, the response module 21221 in the second plane 2122 can accurately determine the end of the first instruction information, so that the accuracy of instruction information execution can be ensured, and the efficiency of data communication can be improved.

Generally, when the consumable chip 210 sends the response data to the printing device 110, the data is generally sent in units of 9 bits. Herein, the 9-bit data includes 8 valid data bits and 1 check bit. The sending of each 1-bit data generally requires one clock signal, and therefore the 9-bit data generally requires nine clock signals. In some embodiments, the determination interval includes 2n*9 clock signals, where n is an integer greater than 0.

Herein, the value of n can be preset according to actual requirements, and the frequency at which the response module 21221 detects whether the first instruction information has ended can be determined by setting the value of n, to meet the load requirements of different users for the consumable chip 210.

As a possible implementation, the consumable chip 210 is specifically used such that: when the first instruction information is the instruction information of the first type, the response module 21221 determines the 2n*9 clock signals as the determination interval, takes a 2n*9-th clock signal after a first clock signal as a reference clock signal based on the determination interval, and determines a target transition moment of the reference clock signal as a target reference moment;
monitors the duration during which the clock signal is the first-level signal after the target reference moment; and
stops executing the first instruction information if the duration during which the clock signal is the first-level signal reaches the preset duration.

Herein, the first clock signal is a clock signal corresponding to when the response module 21221 starts sending the response data to the printing device 110. The target transition moment of the reference clock signal includes a moment when the reference clock signal transitions from the first-level signal to the second-level signal, or a moment when the reference clock signal transitions from the second-level signal to the first-level signal. The first-level signal is different from the second-level signal.

Generally, the first instruction information needs to be parsed before corresponding responses can be made to the printing device 110. Therefore, in order to reduce the monitoring frequency, after acquiring the first instruction information, the response module 21221 does not need to directly monitor whether the first instruction information has ended, but may monitor whether the first instruction information has ended when the consumable chip 210 starts to respond to the printing device 110. During the process of executing the instruction information by the consumable chip 210, the execution of the instruction information generally will end only after the consumable chip 210 replies to the printing device 110. In order to further reduce the monitoring frequency, it is possible to start detecting whether the first instruction information has ended after the consumable chip 210 sends at least one set of response data to the printing device 110. In addition, the quantity of clocks for sending at least one set of response data serves as the determination interval, which is 2n*9 clock signals. Therefore, when the consumable chip 210 responds to the printing device 110, it can detect whether the first instruction information has ended every 2n*9 clock signals passed. Based on this, when the response module 21221 starts sending the response data to the printing device 110 after finishing parsing the first instruction information, the clock signal corresponding to the start of sending the response data, that is, the first clock signal, is taken as the start time, the 2n*9th clock signal after the first clock signal is taken as the reference clock signal, and the target transition moment of the reference clock signal is taken as the target reference moment. Herein, the clock signal generally includes a transition from the first-level signal to the second-level signal and a transition from the second-level signal to the first-level signal. For example, when the first-level signal is a low-level signal and the second-level signal is a high-level signal, the clock signal generally includes a rising edge and a falling edge. Therefore, the target transition moment of the reference clock signal may be a moment when the first-level signal of the clock signal transitions to the second-level signal or a moment when the second-level signal transitions to the first-level signal, that is, the moment when the rising edge of the reference clock signal transitions or the moment when the falling edge of the reference clock signal transitions may be taken as the target reference moment.

The duration during which the clock signal is the first-level signal starts to be detected at the target reference moment, and if the duration during which the clock signal is the first-level signal reaches the preset duration, it can be determined that the first instruction information has ended. When it is determined that the first instruction information has ended, the execution of the first instruction information may be stopped, that is, the execution of read or write operation may be stopped.

As a possible implementation, the consumable chip 210 is further used such that: if the duration during which the clock signal is the first-level signal does not reach the preset duration, the response module 21221 reuses the 2n*9-th clock signal received after the target reference moment as the reference clock signal again, and updates the target reference moment based on the target transition moment of the reference clock signal; and
re-monitors the duration during which the clock signal is the first-level signal after the target reference moment, and re-updates the target reference moment when the duration during which the clock signal is the first-level signal does not reach the preset duration, until monitoring that the duration during which the clock signal is the first-level signal reaches the preset duration, and then stops executing the first instruction information.

If the response module 21221 detects that the duration during which the clock signal is the first-level signal does not reach the preset duration, that is, the clock signal transitions from the first-level signal to the second-level signal within the preset duration, it indicates that the first instruction information has not ended. The response module 21221 needs to continue to detect whether the first instruction information has ended. The response module 21221 may update the reference clock signal, and re-detect whether the first instruction information has ended after an interval of 2n*9 clock signals. The response module 21221 may reuse the 2n*9-th clock signal received after the target reference moment as the reference clock signal, and update the target reference moment according to the target transition moment of the reference clock signal. That is, the updated target transition moment of the reference clock signal is taken as the new target reference moment. In this way, after updating the target reference moment, the duration during which the clock signal is the first-level signal after the target reference moment can be re-monitored, and if the duration during which the clock signal is the first-level signal does not reach the preset duration, it indicates that the first instruction information has not yet ended. The consumable chip 210 needs to continue to detect whether the first instruction information has ended. At this time, the consumable chip 210 needs to update the target reference moment again, and the update process thereof can refer to the above-mentioned process, which will not be repeated herein, until the monitored duration during which the clock signal is the first-level signal after the updated target reference moment reaches the preset duration, and then the execution of the first instruction information may be stopped.

It should be understood that the determination interval is the quantity of clocks for sending at least one set of response data to the printing device 110. Generally, during the processing of the first instruction information, if there is a case in which the clock signal maintains at state of the first-level signal, the state of the clock signal maintaining the first-level signal usually occurs within the transmission time of one set of response data. Therefore, if it is monitored that the duration during which the clock signal maintains the state of the first-level signal reaches the preset duration during the process of sending at least the first set of response data from the consumable chip 210 to the printing device 110, that is, if within the determination interval, even if the response module 21221 monitors that the duration during which the clock signal maintains the state of the first-level signal reaches the preset duration, because this moment is not the moment for monitoring whether the first instruction information has ended, the response module 21221 may determine that the clock signal for the response data still exists subsequently. That is to say, the method described in the embodiments of the present application, which periodically monitors whether the duration during which the clock signal is the first-level signal reaches the preset duration based on the determination interval as a period, can reduce the probability of misjudging the end of the first instruction information in the case that the duration during which the same piece of instruction information is the first-level signal is longer than the preset duration.

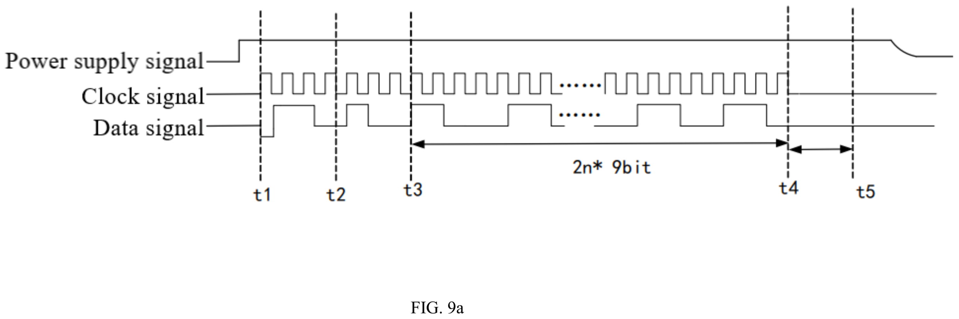

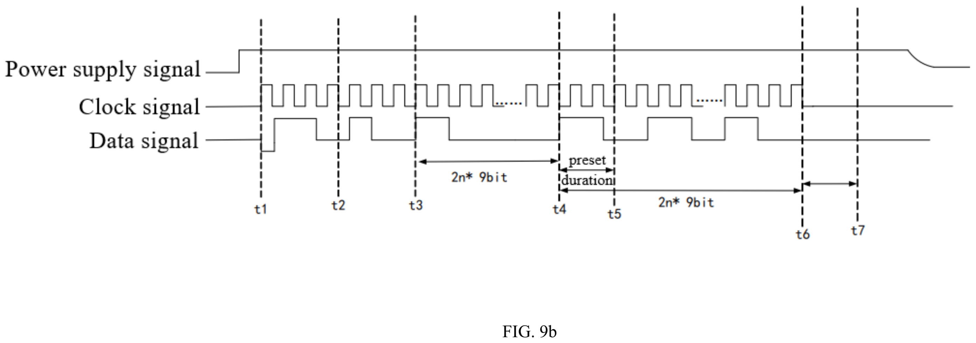

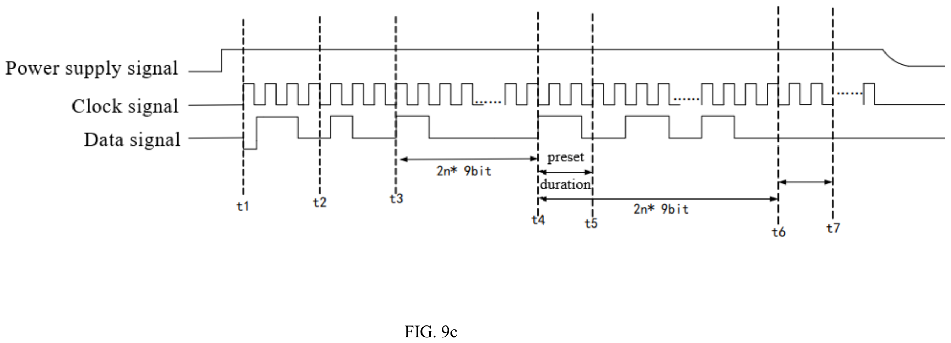

Exemplarily, when the printing device 110 needs to communicate with the consumable chip 210, the printing device 110 may first provide a power supply signal to the consumable chip 210. At this time, the consumable chip 210 can receive the power supply signal through the power supply terminal 2104. The clock signal sent to the consumable chip 210 by the printing device 110 alternates between the first-level signal and the second-level signal. It is assumed that the first-level signal is a low-level signal and the second-level signal is a high-level signal. The printing device 110 sends the clock signal that alternates between the low-level signal and the high-level signal to the consumable chip 210. When the printing device 110 does not communicate with the consumable chip 210, the clock signal sent to the consumable chip 210 is a continuous low-level signal. It is assumed that the consumable chip 210 detects that the received clock signal has a rising edge at t1, the consumable chip 210 can determine that the clock signal received at the t1 is converted from the continuous low-level signal into alternating between the first-level signal and the second-level signal. At this time, the consumable chip 210 can determine to start to execute the first instruction information. The consumable chip 210 receives the first instruction information sent from the printing device 110 from t1 to t2. The consumable chip 210 can parse the instruction information from t2 to t3, determine the type of the instruction information, for example, determine whether the first instruction information is the instruction information of the first type or the instruction information of the second type, and perform corresponding data processing according to the type of the first instruction information. It is assumed that the instruction information received by the consumable chip 210 is the instruction information of the first type, after finishing the corresponding data processing, the consumable chip 210 can reply to the printing device 110 at t3, that is, start sending the response data to the printing device 110 at t3. At this time, the consumable chip 210 can use the first clock signal at the moment of starting to send response data to the printing device 110 as the starting time. That is, the consumable chip 210 can take the t3 as the starting time, and monitor the duration during which the clock signal is the first-level signal once every 2n*9 clock signals after t3. That is, the 2n*9-th clock signal received after t3 serves as the reference clock signal, and the target transition moment of the reference clock signal is taken as the target reference moment. It is assumed that the target transition moment is the falling edge of the clock signal. The consumable chip 210 can take the falling edge of the reference clock signal as the target reference moment, denoted as t4, as shown in FIG. 9a, FIG. 9b and FIG. 9c. During an execution process of the first instruction information, the consumable chip 210 needs to determine whether to end the execution of the first instruction information. The consumable chip 210 can detect whether the duration during which the clock signal received after t4 is the first-level signal has reached the preset duration. It is assumed that the duration between t4 and t5 is the preset duration, after determining t4, the consumable chip 210 needs to detect whether the clock signal is a continuous first-level signal in the period from t4 to t5, and if the clock signal is a continuous first-level signal in the period from t4 to t5, referring to FIG. 9a, the execution of the first instruction information can be ended.

If it is detected that the duration during which the clock signal is the first-level signal does not reach the preset duration, that is, the clock signal transitions from the first-level signal to the second-level signal between t4 and t5, as shown in FIGs. 9b and 9c, it indicates that the first instruction information has not ended. At this time, the consumable chip 210 may update the target reference moment according to the target reference moment t4. That is, the consumable chip 210 may reuse the 2n*9-th clock received after the target reference moment t4 as the reference clock signal, take a transition moment of the falling edge of the reference clock signal as the new target reference moment to update the target reference moment. As shown in FIG. 9b and FIG. 9c, the consumable chip 210 can determine the transition moment of the falling edge of the reference clock signal, that is, t6, as the new target reference moment. At this time, the consumable chip 210 needs to monitor whether the duration that the clock signal is the first-level signal after t6 reaches the preset duration. That is, the consumable chip 210 needs to detect whether the clock signal is at the first level from t6 to t7. If the clock signal is a continuous first-level signal from t6 to t7, referring to FIG. 9b, the execution of the first instruction information may be ended.

If it is detected that the duration during which the clock signal is the first-level signal does not reach the preset duration, that is, the clock signal transitions from the first-level signal to the second-level signal within the period from t6 to t7, as shown in FIG. 9c, it indicates that the first instruction information has not end, and the target reference moment needs to be continuously updated. At this time, the consumable chip 210 can continue to update the target reference moment by means of the described method until monitoring that the duration during which the clock signal is the first-level signal reaches the preset duration, and the execution of the first instruction information can be ended.

In some embodiments, the consumable chip 210 is specifically used to: determine a data length of the first instruction information when the first instruction information is the instruction information of the first type. When the data length of the first instruction information reaches a preset length threshold value, the end of the instruction information of the first type is determined according to a moment when the response data transmission is completed.

In the embodiments of the present application, the instruction information sent by the printing device 110 is not infinitely long and has an upper length limit. That is, the first instruction information sent by the printing device 110 does not exceed the preset length threshold. When the data length of the first instruction information sent by the printing device 110 reaches the preset length threshold, it indicates that the first instruction information sent by the printing device 110 has reached the upper limit of the data length. At this time, when the response module 21221 receives the first instruction information, and detects that the first instruction information has reached the preset length threshold value, it means that the printing device 110 has completely sent all the contents of the first instruction information. At this time, the response module 21221 does not need to determine whether the first instruction information has ended and may directly determine that the first instruction information has ended after sending the response data, and stop executing the first instruction information.

In this way, the response module 21221 determines the determination interval, and periodically monitors the duration during which the clock signal is the first-level signal based on the determination interval as a period, including:
when the data length of the first instruction information does not reach the preset length threshold, the response module 21221 determines the determination interval, and periodically monitors the duration during which the clock signal is the first-level signal based on the determination interval as a period.

That is, when the first instruction information received by the response module 21221 does not reach the preset length threshold, the printing device 110 may further continue to send the data content of the first instruction information, and therefore the response module 21221 needs to determine whether the first instruction information has ended. When the data length of the first instruction information does not reach the preset length threshold, the response module 21221 needs to determine the determination interval, and periodically monitor the duration during which the clock signal is the first-level signal based on the determination interval as a period, to determine whether the first instruction information has ended.

In this way, the probability of misjudging the end of the first instruction information can be further reduced when the duration during which the same piece of instruction information is the first-level signal is longer than the preset duration.

It should be understood that the determination interval is the quantity of clocks for sending at least one set of response data to the printing device 110. Generally, in the processing of the first instruction information, if there is a case in which the clock signal maintains the state of the first-level signal, the state of the clock signal maintaining the first-level signal usually occurs within the transmission time of one set of response data. Therefore, if it is monitored that the duration during which the clock signal maintains the state of the first-level signal reaches the preset duration during the process of sending at least one set of response data from the consumable chip 210 to the printing device 110, that is, if within the determination interval, even if the response module 21221 detects that the duration during which the clock signal maintains the state of the first-level signal reaches the preset duration, because this moment is not the moment for monitoring whether the first instruction information has ended, the response module 21221 may determine that the clock signal for the response data still exists subsequently. That is to say, the method described in the embodiments of the present application, which periodically monitors whether the duration during which the clock signal is the first-level signal reaches the preset duration based on the determination interval as a period, can reduce the probability of misjudging the end of the first instruction information in the case that the duration during which the same piece of instruction information is the first-level signal is longer than the preset duration.

In some embodiments, when the instruction information of the first type is the instruction information with a non-fixed duration, there may be clock signal that maintains the state of the second-level signal or the state of the first-level signal for a certain duration in the instruction information of the first type, rather than alternating between the first-level signal and the second-level signal. That is, the instruction information of the first type includes two sub-types: instruction information of a first sub-type and instruction information of a second sub-type. Herein, during the transmission process of the data signal, the instruction information of the second sub-type has a situation where the clock signal maintains the state of the second-level signal or the state of the first-level signal for a certain duration, rather than alternating between the first-level signal and the second-level signal. In some embodiments, this certain duration may be longer than the first preset duration. Referring to FIG. 7, it is assumed that the time corresponding to the processes of sending, processing, and replying to the first instruction information is t1-t10, and the second instruction information starts to be executed after t11. In FIG. 7, in the process of executing the first instruction information being the instruction information of the second sub-type, there exists a time period from t8 to t9 where the clock signal maintains the first-level signal without transition, and at this time, the first instruction information has not ended. It is assumed that a time interval between t8 and t9 is X, a time interval between t10 and t11 is Y, and the first preset duration is Z. When Y is greater than Z and X is less than Y, that is, after t10, the response module 21221 monitors that the clock signal maintains the first-level signal within the first preset duration Z, that is, no clock signal alternating between the first-level signal and the second-level signal is monitored within the first preset duration Z. At this time, the response module 21221 may stop executing the first instruction information.

If the time interval X between t8 and t9 is longer than the first preset duration Z, in order to reduce the probability of misjudging the end of the instruction information, in the embodiments of the present application, the determination of whether the first instruction information has ended is performed once after every interval of 2n*9 clock signals based on the determination interval as a period, for example, by taking the 2n*9 clock signals as a period. Generally, the situation that the clock signal in the instruction information of the second sub-type keeps the state of the second-level signal or the first-level signal usually occurs with the transmission time of one set of response data, that is, within the 2*9 clock signals. Therefore, if during the process of sending at least a first set of response data from the consumable chip 210 to the printing device 110, that is, if the response module 21221 monitors that the duration during which the clock signal maintains the state of the second-level signal or the first-level signal reaches the preset duration within the 2n*9 clock signals, because this moment is not the moment for monitoring whether the first instruction information has ended, the response module 21221 may determine that a clock signal for this frame of response data further exists subsequently. That is to say, the method described in the embodiments of the present application, which periodically monitors whether the duration during which the clock signal is the first-level signal reaches the preset duration based on the determination interval as a period, can reduce the probability of misjudging the end of the first instruction information in the case that the duration during which the same piece of instruction information is the first-level signal is longer than the preset duration.

In some embodiments, in order to execute the first instruction information more accurately, the consumable chip 210 not only can determine the end of the first instruction information, but also can determine the start time of the first instruction information. The details are as follows:
when the printing device 110 does not send instruction information to the consumable chip 210, the clock signal sent by the printing device 110 to the consumable chip 210 is the continuous first-level signal. That is, the printing device 110 sends an invalid clock signal to the consumable chip 210. At this time, the response module 21221 may receive the invalid clock signal through the clock terminal in the first plane 2121. After receiving the invalid clock signal, the response module 21221 may determine that the first instruction information has not started according to the invalid clock signal.

When the printing device 110 needs to send instruction information to the consumable chip 210, the clock signal sent by the printing device 110 to the consumable chip 210 transitions from the continuous first-level signal into alternating between the first-level signal and the second-level signal. At this time, the response module 21221 may receive the clock signal through the clock terminal in the first plane 2121. After receiving the clock signal, the response module 21221 may detect that the clock signal transitions from the continuous first-level signal into alternating between the first-level signal and the second-level signal. The response module 21221 may determine that the first instruction information has started, that is, the execution of the first instruction information starts.

In this way, in the embodiments of the present application, the start and end of the first instruction information can be accurately determined, thereby ensuring the accurate execution of the first instruction information and improving the communication efficiency between the consumable chip 210 and the printing device 110.

As a possible implementation, for the convenience of implementation, the first-level signal mentioned above is a low-level signal, and the second-level signal mentioned above is a high-level signal.

In some embodiments, in order to ensure the accuracy of determining the end of the first instruction information, the preset duration is longer than a duration of one clock signal, and shorted than an interval duration between the first instruction information and a next instruction information.

As a possible implementation, the response module 21221 may determine whether the first instruction information has ended not only through the clock signal, but also through other signals. In some embodiments, the response module 21221 may determine whether the first instruction information has ended through the power supply signal. The response module 21221 is electrically connected to the power supply terminal of the first plane 2121, and may receive the power supply signal sent by the printing device 110 through the power supply terminal, and determine whether the first instruction information has ended according to the power supply signal.

When the printing device 110 does not send instruction information to the consumable chip 210, the printing device 110 sends the power supply signal of the first-level signal to the consumable chip 210. At this time, the response module 21221 may acquire the power supply signal of the first-level signal, and may determine that the first instruction information has not started when receiving the power supply signal of the first-level signal.

When the printing device 110 starts communicating with the consumable chip 210, the printing device 110 transitions the power supply signal to the second-level signal and sends it to the consumable chip 210. At this time, the response module 21221 may acquire the power supply signal transitioned to the second-level signal. When detecting that the power supply signal is changed from the first-level signal to the second-level signal, the response module 21221 determines that the first instruction information has started, and the response module 21221 starts to execute the first instruction information.

When the printing device 110 ends communication with the consumable chip 210, the printing device 110 transitions the power supply signal to the first-level signal and sends it to the consumable chip 210. At this time, the response module 21221 may acquire the power supply signal which is changed into the first-level signal. When detecting that the power supply signal transitions from the second-level signal to the first-level signal, the response module 21221 may determine that the first instruction information has ended and stop executing the first instruction information.

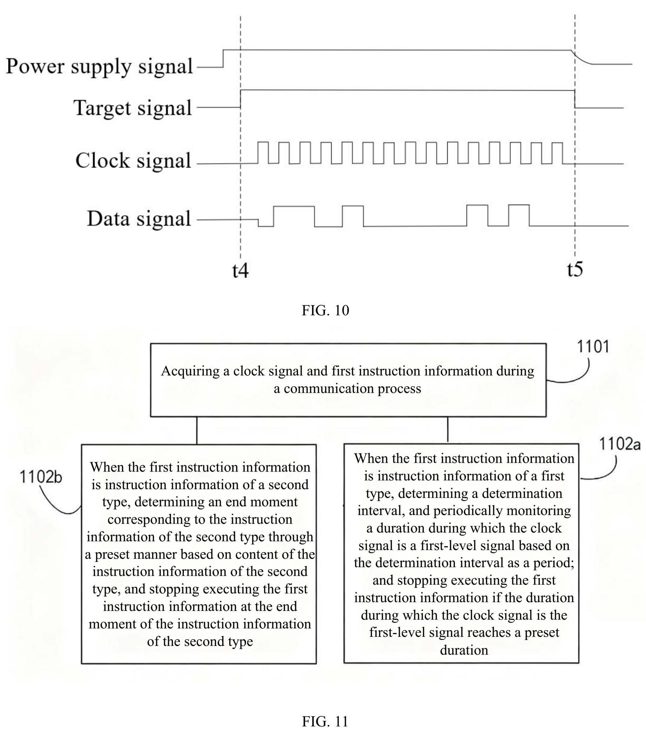

Exemplarily, as shown in FIG. 10, it is assumed that the second-level signal is a high-level signal, and the first-level signal is a low-level signal. Before t4, the power supply signal sent by the printing device 110 to the consumable chip 210 is a low-level signal. The response module 21221 acquires the power supply signal of the low-level signal, and may determine that the first instruction information has not started.

At t4, the printing device 110 starts to communicate with the consumable chip 210, and at this time, the power supply signal sent to the consumable chip 210 by the printing device 110 transitions to a high-level signal. The response module 21221 acquires the power supply signal of the high-level signal, and at this time, the response module 21221 may detect that the power supply signal transitions from the low-level signal to the high-level signal at t4, determine that the first instruction information has started, and start to execute the first instruction information.

At t5, the printing device 110 needs to end communication with the consumable chip 210, and at this time, the power supply signal sent by the printing device 110 to the consumable chip 210 is changed to the low-level signal. The response module 21221 acquires the power supply signal of the low-level signal, and at this time, the response module 21221 may detect that the power supply signal transitions from the high-level signal to the low-level signal at t5, the response module 21221 may determine the end of the first instruction information at t5, and stop executing the first instruction information at t5.

Of course, the response module 21221 may also determine whether the first instruction information has ended through other signals, which is not limited in the embodiments of the present invention herein.

In this way, in the embodiments of the present application, the consumable chip 210 can further determine the end of the instruction information in various manners.

In a second aspect, referring to FIG. 11, it is a schematic flowchart of a communication provided by an embodiment of the present application, and the method is applied to the consumable chip 210 described in the above embodiments. As shown in FIG. 11, the method includes the following steps.

Step S1101, acquiring a clock signal and first instruction information during a communication process.

The response module 21221 of the consumable chip 210 executes different steps according to different types of the first instruction information. When the first instruction information is instruction information of a first type, step S1002a is executed; and when the first instruction information is instruction information of a second type, step S1002b is executed.
step S1102a, when the first instruction information is instruction information of a first type, determining a determination interval, and periodically monitoring a duration during which the clock signal is a first-level signal based on the determination interval as a period; and stopping executing the first instruction information if the duration during which the clock signal is the first-level signal reaches a preset duration.

Herein, the determination interval is a quantity of clocks for sending at least one set of response data to the printing device 110.

Step S1102b, when the first instruction information is instruction information of a second type, determining an end moment corresponding to the instruction information of the second type through a preset manner based on content of the instruction information of the second type, and stopping executing the first instruction information at the end moment of the instruction information of the second type.

As a possible implementation, the determination interval includes 2n*9 clock signals, where n is an integer greater than 0.

As a possible implementation, in the step S1102a, when the first instruction information is the instruction information of the first type, determining a determination interval, and periodically monitoring a duration during which the clock signal is a first-level signal based on the determination interval as a period; and stopping executing the first instruction information if the duration during which the clock signal is the first-level signal reaches a preset duration, including:
when the first instruction information is the instruction information of the first type, determining 2n*9 clock signals as the determination interval; taking a 2n*9-th clock signal after the first clock signal as a reference clock signal based on the determination interval, and determining a target transition moment of the reference clock signal as a target reference moment;
monitoring the duration during which the clock signal is the first-level signal after the target reference moment; and
stopping executing the first instruction information if the duration during which the clock signal is the first-level signal reaches the preset duration.

Herein, the first clock signal is a clock signal corresponding to the moment when starting sending response data to the printing device 110. The target transition moment of the reference clock signal includes a moment when the reference clock signal transitions from the first-level signal to the second-level signal, or a moment when the reference clock signal transitions from the second-level signal to the first-level signal. The first-level signal is different from the second-level signal.

As a possible implementation, the method further includes:
if the duration during which the clock signal is the first-level signal does not reach the preset duration, reusing the 2n*9-th clock signal received after the target reference moment as the reference clock signal, and updating the target reference moment based on the target transition moment of the reference clock signal; and
re-monitoring the duration during which the clock signal is the first-level signal after the target reference moment, and re-updating the target reference moment when the duration during which the clock signal is the first-level signal does not reach the preset duration, until monitoring that the duration during which the clock signal is the first-level signal reaches the preset duration, and then stopping executing the first instruction information.

As a possible implementation, the preset duration is greater than a duration of one clock signal, and is less than an interval duration between the first instruction information and the next instruction information.

As a possible implementation, the first-level signal includes a low-level signal.

As a possible implementation, one set of response data includes original data and inverse code data, where the original data and the inverse code data are inverse codes of each other.

As a possible implementation, the instruction information of the first type is instruction information with a non-fixed duration, and the instruction information of the second type is instruction information with a fixed duration.

Corresponding to the above-mentioned embodiments, the present application further provides a consumable cartridge including the consumable chip 210 described in the above-mentioned embodiments.

Corresponding to the above-mentioned embodiments, the present application also provides an image forming apparatus, including the consumable chip 210 described in the above-mentioned embodiments or including the consumable cartridge described in the above-mentioned embodiments.

In the description of this specification, the description with reference to the terms "one embodiment", "some embodiments", "examples", "specific examples", or "some examples" means that the specific features, structures, materials, or characteristics described in connection with the embodiment or example are included in at least one embodiment or example of the present application. In this specification, the schematic expressions of the above terms do not necessarily refer to the same embodiments or examples. Furthermore, the specific features, structures, materials, or characteristics described may be combined in any suitable manner in one or more embodiments or examples. In addition, those skilled in the art can combine and integrate the different embodiments or examples as well as the features of the different embodiments or examples described in this specification, without conflicting with each other.

In addition, the terms such as "first" and "second" are only used for descriptive purposes and shall not be construed as indicating or implying relative importance or to implying specifying the quantity of indicated technical features. Thus, the features defined by "first" and "second" may explicitly or implicitly include at least one of the features. In the description of the present application, the meaning of "a plurality of" is at least two, for example, two, three, etc., unless otherwise specified.

Any process or method description described in flow chart or otherwise described herein may be understood as representing a module, segment, or portion of code that includes one or more executable instructions for implementing steps of a customized logic function or process, and the scope of preferred embodiments of the present application includes additional implementations, in which functions may be executed not in the order shown or discussed, including in a substantially simultaneous manner or in reverse order based on the functions involved, which should be understood by those skilled in the art which the embodiments of the present application belong to.

## Claims

1. A chip, the chip is in communication with an image forming apparatus, a communication process thereof comprises several pieces of instruction information, and the chip comprises a response module, a clock terminal and a data terminal, wherein the clock terminal is used to receive a clock signal from the image forming apparatus, the data terminal is used to send or receive a data signal, and the response module is electrically connected to the clock terminal and the data terminal and is configured to send response data to the image forming apparatus during the communication process, **characterized in that**,
the chip is configured not to receive a chip select signal from the image forming apparatus;
the chip is used such that, during the communication process, the response module acquires the clock signal and first instruction information;
when the first instruction information is instruction information of a first type, the response module determines a determination interval, and periodically monitors a duration during which the clock signal is a first-level signal based on the determination interval as a period; and stops executing the first instruction information if the duration during which the clock signal is the first-level signal reaches a preset duration; the determination interval is a quantity of clocks for sending at least one set of response data to the image forming apparatus; and
when the first instruction information is instruction information of a second type, the response module determines an end moment corresponding to the instruction information of the second type through a preset manner based on content of the instruction information of the second type, and stops executing the first instruction information at the end moment of the instruction information of the second type.

2. The chip according to claim 1, wherein the determination interval comprises 2n*9 clock signals; wherein n is an integer greater than 0.

3. The chip according to claim 2, wherein the chip is specifically used such that:
when the first instruction information is the instruction information of the first type, the response module determines the 2n*9 clock signals as the determination interval, takes a 2n*9-th clock signal after a first clock signal as a reference clock signal based on the determination interval, and determines a target transition moment of the reference clock signal as a target reference moment; wherein the first clock signal is a clock signal corresponding to a moment when the response module starts sending the response data to the image forming apparatus; the target transition moment of the reference clock signal comprises a moment when the reference clock signal transitions from the first-level signal to a second-level signal, or a moment when the reference clock signal transitions from the second-level signal to the first-level signal; and the first-level signal is different from the second-level signal;
monitors a duration during which the clock signal is the first-level signal after the target reference moment; and
stops executing the first instruction information if the duration during which the clock signal is the first-level signal reaches the preset duration.

4. The chip according to claim 3, wherein the chip is further used such that:
if the duration during which the clock signal is the first-level signal does not reach the preset duration, the response module reuses the 2n*9-th clock signal received after the target reference moment as the reference clock signal, and updates the target reference moment based on the target transition moment of the reference clock signal; and
re-monitors the duration during which the clock signal is the first-level signal after the target reference moment, and re-updates the target reference moment when the duration during which the clock signal is the first-level signal does not reach the preset duration, until monitoring that the duration during which the clock signal is the first-level signal reaches the preset duration, and then stops executing the first instruction information.

5. The chip according to claim 1, wherein the preset duration is greater than a duration of one clock signal, and is less than an interval duration between the first instruction information and a next instruction information.

6. The chip according to any one of claims 1-5, wherein the first-level signal comprises a low-level signal.

7. The chip according to claim 2, wherein the one set of response data comprises original data and inverse code data, wherein the original data and the inverse code data are inverse codes of each other.

8. The chip according to claim 1, wherein the instruction information of the first type is instruction information with a non-fixed duration and the instruction information of the second type is instruction information with a fixed duration.

9. A communication method, which is applied to the chip according to any one of claims 1-8, the method comprises:
acquiring a clock signal and first instruction information during a communication process;
when the first instruction information is the instruction information of the first type, determining a determination interval, and periodically monitoring a duration during which the clock signal is a first-level signal based on the determination interval as a period; and stopping executing the first instruction information if the duration during which the clock signal is the first-level signal reaches a preset duration; wherein the determination interval is a quantity of clocks for sending at least one set of response data to the image forming apparatus; and
when the first instruction information is the instruction information of the second type, determining an end moment corresponding to the instruction information of the second type through a preset manner based on content of the instruction information of the second type, and stopping executing the first instruction information at the end moment of the instruction information of the second type.

10. A consumable cartridge, comprising the chip according to any one of claims 1-8.
